# EUROPEAN PATENT APPLICATION

(11) **EP 4 825 477 A1**
(43) Date of publication of application: **21.10.2026**
(21) Application number: 24904448.8
(22) Date of filing: 13.12.2024
(51) Int. Cl.: B01D 61/52, B01D 61/46, B01D 61/42, C02F 1/469

(54) **SPACER FOR ELECTRODIALYSIS SYSTEM AND ELECTRODIALYSIS SYSTEM COMPRISING SAME**

(30) Priority: 15.12.2023 KR 20230183288
(71) Applicant: POSCO Holdings Inc., Pohang-si, Gyeongsangbuk-do 37859 (KR)
(72) Inventor: CHOI, Jaehyug, Pohang-si, Gyeongsangbuk-do 37859 (KR); KANG, Chanhyeok, Pohang-si, Gyeongsangbuk-do 37859 (KR); KIM, Hye Jeong, Pohang-si, Gyeongsangbuk-do 37859 (KR); KIM, Kyunghoon, Pohang-si, Gyeongsangbuk-do 37859 (KR); LEE, Sihwa, Pohang-si, Gyeongsangbuk-do 37859 (KR); MYEONG, Wan Jae, Pohang-si, Gyeongsangbuk-do 37859 (KR)
(74) Representative: Pfenning, Meinig & Partner mbB
(86) International application number: PCT/KR2024/096965
(87) International publication number: WO 2025/127884

(57) **Abstract**

A spacer for electrodialysis according to the present invention comprises: a first outer portion; a second outer portion; and a central portion positioned between the first outer portion and the second outer portion, wherein at least one of the first outer portion and the second outer portion has flow resistance different from that of the central portion.

## Description

### [TECHNICAL FIELD]

The present invention relates to a spacer for an electrodialysis system and an electrodialysis system including the same.

### [BACKGROUND ART]

As the era of electric vehicles has arrived, the lithium-ion battery industry has been rapidly growing, and accordingly, demand for lithium as a battery material has been continuously increasing.

Commercial production of lithium is broadly divided into a method of extracting lithium from ore and a method of producing lithium from brine. Most of the lithium produced from ore is produced from spodumene concentrate by a sulfuric acid process. Lithium produced from brine is mainly produced from underground brine in South America through natural drying, removal of by-products, and additional processes. In the future, as electric vehicles become more widely distributed, it is expected that the proportion of recycled lithium used in lithium-ion battery production by re-extracting lithium from waste batteries will gradually increase.

Meanwhile, lithium intermediates used for manufacturing battery materials have previously been mainly in the form of lithium carbonate. However, as extending the driving distance of electric vehicles has emerged as a major technical issue, demand for high-power-density batteries has increased, and demand for lithium hydroxide, which is a raw material for high-power-density battery materials, has been rapidly increasing.

Lithium hydroxide is mainly produced by a lime process in which lithium carbonate and calcium hydroxide are reacted. Recently, however, attention has been drawn to processes for directly preparing lithium hydroxide from intermediates such as lithium sulfate, lithium chloride, and lithium phosphate without passing through lithium carbonate.

Representative processes for directly preparing lithium hydroxide from ore include a causticization process in which lithium hydroxide is prepared by reacting sodium hydroxide with a lithium sulfate solution and sodium sulfate is generated as a by-product, and a bipolar electrodialysis (BPED) process in which a lithium hydroxide solution is treated by electrodialysis to separate lithium hydroxide and sulfuric acid. The bipolar electrodialysis process is an economical and environmentally friendly process because it does not use auxiliary raw materials such as sodium hydroxide and reuses sulfuric acid for treatment of spodumene concentrate, thereby generating no by-products.

A bipolar electrodialysis system includes an anion exchange membrane and a cation exchange membrane, and a spacer is disposed between the anion exchange membrane and the cation exchange membrane. The spacer serves to secure a flow path, reduce differential pressure, and secure a space to prevent contact between ion exchange membranes, thereby increasing electrochemical potential.

In an electrodialysis system, when stagnation occurs in a flow between ion exchange membranes due to impurities or the like, inflow of ions into a stagnation section decreases, and a CP (viscosity) modulus changes. When ion concentration is locally reduced, ion transfer efficiency may decrease due to a reduction in an effective membrane utilization area of ion exchange membranes, spacers, and the like, and problems may somewhat occur in that membranes such as ion exchange membranes and spacers are damaged due to generation of electrical resistance heat.

Accordingly, there is a need to develop an electrodialysis system capable of improving ion exchange performance.

### [DETAILED DESCRIPTION OF THE INVENTION]

### [Technical Problem]

The present invention is intended to provide a spacer for an electrodialysis system, which can improve ion exchange performance by suppressing stagnation at an outer portion of the spacer.

In addition, the present invention is intended to provide an electrodialysis system having excellent ion transfer efficiency and suppressing generation of electrical resistance heat.

### [Technical Solution]

The present invention provides a spacer for an electrodialysis system, comprising: a first outer portion; a second outer portion; and a central portion positioned between the first outer portion and the second outer portion, wherein at least one of the first outer portion and the second outer portion has flow resistance different from that of the central portion.

In addition, the present invention provides an electrodialysis system comprising: a positive electrode; a negative electrode positioned to face the positive electrode; cation exchange membranes and anion exchange membranes alternately installed between the positive electrode and the negative electrode; and the above-described spacer interposed between the cation exchange membrane and the anion exchange membrane.

### [Advantageous Effects]

The spacer for an electrodialysis system according to the present invention has an advantage of minimizing occurrence of a flow stagnation region because flow resistances of the outer portion and the central portion are different from each other.

### [BRIEF DESCRIPTION OF THE DRAWINGS]

FIG. 1 is a view illustrating a spacer for an electrodialysis system according to some embodiments of the present invention.
FIG. 2 is a view showing shapes of lattices in a first outer portion, a second outer portion, and a central portion of a spacer for an electrodialysis system according to an Example.
FIGS. 3 and 4 are views showing flow analysis according to shapes of lattices of a spacer for an electrodialysis system.
FIGS. 5 and 6 are views showing magnitudes of flow velocities of spacers for electrodialysis according to an Example and a Comparative Example, respectively.
FIGS. 7 and 8 are views showing standard deviations of flow velocity at positions from 10% to 90% of the total height with respect to a width direction of spacers for an electrodialysis system according to an Example and a Comparative Example, respectively.

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

In the present invention, when a member is referred to as being positioned "on" another member, this includes not only a case in which the member is in direct contact with the other member, but also a case in which another member is interposed between the two members.

In the present invention, when a part is referred to as "comprising" a certain component, this means that other components may be further included, rather than excluding other components, unless specifically stated to the contrary.

### <Spacer for Electrodialysis System>

One aspect of the present invention relates to a spacer for an electrodialysis system, comprising: a first outer portion 10; a second outer portion 20; and a central portion 30 positioned between the first outer portion 10 and the second outer portion 20, wherein at least one of the first outer portion 10 and the second outer portion 20 has flow resistance different from that of the central portion 30.

An electrodialysis system may be utilized for lithium extraction. For example, a unit process may be utilized in which a lithium sulfate solution is passed through an electrodialysis membrane to prepare a lithium hydroxide solution. At this time, formation of a uniform flow field in a wide and thin dialysis membrane is very important, and formation of a non-uniform flow field causes problems in operation or equipment.

For example, when the flow velocity is low, impurities may be concentrated due to problems such as a stagnation region, and thus a membrane may be damaged. When the flow velocity is high, deformation of the membrane may occur.

In the present invention, damage to such a membrane can be suppressed by disposing, at an outer portion where a stagnation region mainly occurs, a portion having different flow resistance, specifically a portion having lower flow resistance than the central portion 30.

In the present invention, the term "outer portion" may refer to a region corresponding to within 30%, specifically within 20%, in a width direction of the spacer for an electrodialysis system from both ends of the spacer for an electrodialysis system.

In the present invention, the term "central portion 30" may refer to a region of the spacer for an electrodialysis system excluding the outer portions.

In an embodiment of the present invention, the first outer portion 10 and the second outer portion 20 may have flow resistance different from that of the central portion 30.

When both the first outer portion 10 and the second outer portion 20 have flow resistance different from that of the central portion 30, it is preferable because a more uniform flow field can be formed. Specifically, since an inlet and an outlet provided in the spacer for an electrodialysis system are not left-right symmetrical, it may be advantageous to appropriately adjust flow resistance according to positions of the inlet and the outlet. More specifically, since there is a high probability that a stagnation region occurs in the first outer portion 10 and the second outer portion 20 corresponding to both ends of the spacer for an electrodialysis system, it is preferable that both the first outer portion 10 and the second outer portion 20 have flow resistance different from that of the central portion 30.

The first outer portion 10 and the second outer portion 20 may have the same or different flow resistances.

In another embodiment of the present invention, the first outer portion 10 and the second outer portion 20 may have the same flow resistance.

When the first outer portion 10 and the second outer portion 20 have the same flow resistance, it may be advantageous in terms of commercialization, such as ease of manufacture and assembly.

In another embodiment of the present invention, at least one of the first outer portion 10 and the second outer portion 20 may have lower flow resistance than the central portion 30.

When at least one of the first outer portion 10 and the second outer portion 20 has lower flow resistance than the central portion 30, the flow velocity near the outer portion, that is, the first outer portion 10 and the second outer portion 20, increases, and thus occurrence of a stagnation region can be minimized to suppress damage to the spacer, and there is an advantage in that ion exchange is facilitated by having a uniform ion concentration.

In another embodiment of the present invention, the first outer portion 10 and the second outer portion 20 may have lower flow resistance than the central portion 30.

When both the first outer portion 10 and the second outer portion 20 have lower flow resistance than the central portion 30, the intended effect is further improved, which is preferable.

In another embodiment of the present invention, an angle of a lattice structure disposed in the central portion 30 may be greater than an angle of a lattice structure disposed in the first outer portion 10 or the second outer portion 20.

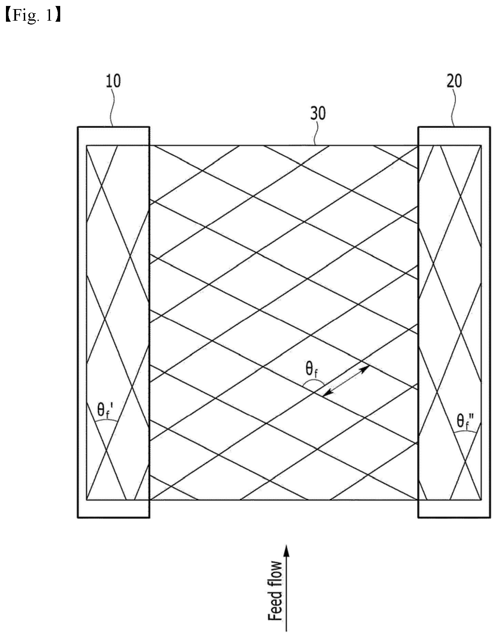

In the present invention, the "angle of the lattice structure" means θ_{f}, θ_{f'}, and θ_{f"} in FIG. 1.

Specifically, a lattice structure having a diamond or parallelogram shape with respect to a flow direction may be included in the first outer portion 10, the second outer portion 20, and the central portion 30 (see FIG. 1).

More specifically, a lattice structure having a diamond shape may be included in the first outer portion 10, the second outer portion 20, and the central portion 30.

In the present invention, by varying the angles of the lattice structures disposed in the first outer portion 10, the second outer portion 20, and the central portion 30, flow resistance of the first outer portion 10, the second outer portion 20, and the central portion 30 can be controlled.

In another embodiment of the present invention, the angle of the lattice structure disposed in the central portion 30 may be greater than the angles of the lattice structures disposed in the first outer portion 10 and the second outer portion 20.

When the angle of the lattice structure disposed in the central portion 30 is greater than the angles of the lattice structures disposed in the first outer portion 10 and the second outer portion 20, a large change in flow velocity is caused to guide the flow to the outer portions, thereby suppressing occurrence of a stagnation region at the outer portions, which is preferable.

In another embodiment of the present invention, the angle θf' of the lattice structure disposed in the first outer portion 10 may be 30° to 80°, preferably 40° to 80°, and more preferably 50° to 60°.

In another embodiment of the present invention, the angle θf" of the lattice structure disposed in the second outer portion 20 may be 30° to 80°, preferably 40° to 80°, and more preferably 50° to 60°.

In another embodiment of the present invention, the angle θf of the lattice structure disposed in the central portion 30 may be 90° to 150°, preferably 100° to 130°, and more preferably 110° to 120°.

When the angles of the lattice structures disposed in the first outer portion 10, the second outer portion 20, and the central portion 30 satisfy the respective ranges above, a large change in flow velocity is caused, and the effect of suppressing occurrence of a stagnation region at the outer portions can be maximized, which is preferable.

In another embodiment of the present invention, one side length of the lattice structure disposed in the first outer portion 10 may be 0.5 mm to 10 mm, preferably 1 mm to 8 mm, and more preferably 2 mm to 5 mm.

In another embodiment of the present invention, one side length of the lattice structure disposed in the second outer portion 20 may be 0.5 mm to 10 mm, preferably 1 mm to 8 mm, and more preferably 2 mm to 5 mm.

In another embodiment of the present invention, one side length of the lattice structure disposed in the central portion 30 may be 0.5 mm to 10 mm, preferably 1 mm to 8 mm, and more preferably 2 mm to 5 mm.

In short, when the lattice structure disposed in the first outer portion 10 has a diamond shape, lengths of four sides of the diamond may satisfy the above range.

When the lattice structure disposed in the first outer portion 10 has a parallelogram shape, lengths of a long side and a short side of the parallelogram may each satisfy the above range.

When one side length of the lattice structure disposed in each of the first outer portion 10, the second outer portion 20, and the central portion 30 satisfies the above range, the intended ion exchange performance is excellent, and problems in which the spacer for an electrodialysis system is damaged by the flow velocity, differential pressure, or the like of treated water can be suppressed, which is preferable.

The diameter of a strand forming the lattice structure may be 0.1 mm to 1.0 mm, preferably 0.2 mm to 0.8 mm, and more preferably 0.35 mm to 0.5 mm, but is not limited thereto.

However, when the diameter of the strand satisfies the above range, durability of the spacer 100 for electrodialysis according to the present invention is improved, which is preferable.

The spacer 100 for electrodialysis may have a width of 10 mm to 1,500 mm, preferably 300 mm to 1,500 mm, and more preferably 400 mm to 1,200 mm. When the width of the spacer 100 for electrodialysis satisfies the above range, the spacer is located within a production range of a commercial membrane, and thus a system can be easily configured, which is preferable.

The spacer 100 for electrodialysis according to the present invention may have a thickness of 0.3 mm to 2.0 mm, preferably 0.3 mm to 1.2 mm, and more preferably 0.6 mm to 1.0 mm, but is not limited thereto.

However, when the thickness of the spacer 100 for electrodialysis satisfies the above range, the thickness of the spacer 100 for electrodialysis can be minimized while deformation of the spacer 100 for electrodialysis can be suppressed, and flow velocity between membranes can be appropriately maintained, which is preferable.

The spacer 100 for electrodialysis according to the present invention may have a height of 500 to 1,500, preferably 700 to 1,500, and more preferably 1,220 to 1,500, but is not limited thereto.

When the height of the spacer 100 for electrodialysis satisfies the above range, a gradient of ion concentration is formed in an overall length (height) direction, which is preferable because ion exchange performance is improved.

The spacer 100 for electrodialysis may further include an outlet, an inlet, and the like for treated water, but is not limited thereto.

In the present invention, a method for manufacturing the spacer 100 for electrodialysis is not limited. For example, the spacer 100 for electrodialysis may be manufactured using injection molding or a method of drawing a polymer material into a thread form and weaving the same. In the case of weaving, two or more spacers having different flow resistances, specifically different angles in lattice structures, may be manufactured and then bonded to each other, but the present invention is not limited thereto.

The spacer 100 for electrodialysis may be manufactured using a non-conductive polymer material such as Teflon, but is not limited thereto.

The spacer 100 for electrodialysis according to the present invention can improve ion exchange performance by controlling a physical shape without being limited by material.

Since the spacer for an electrodialysis system according to the present invention includes outer portions and the central portion 30 having different flow resistances, a relatively stronger flow velocity can be generated at the outer portions as compared with a conventional spacer, thereby suppressing occurrence of stagnation in a flow between ion exchange membranes of a cation exchange membrane and an anion exchange membrane. Accordingly, there is an advantage of increasing ion transfer efficiency.

The spacer 100 for electrodialysis according to the present invention can be usefully applied to a reverse osmosis system (RO; Reverse Osmosis), a bipolar electrodialysis system (BPED; Bipolar Electrodialysis), and the like.

### <Electrodialysis System>

Another aspect of the present invention relates to an electrodialysis system comprising: a positive electrode; a negative electrode positioned to face the positive electrode; cation exchange membranes and anion exchange membranes alternately installed between the positive electrode and the negative electrode; and the above-described spacer interposed between the cation exchange membrane and the anion exchange membrane.

The electrodialysis system according to the present invention has an advantage of excellent ion exchange performance.

The positive electrode may include a substrate including titanium (Ti), tantalum (Ta), nickel (Ni), or a similar metal.

A surface of the substrate may be coated with a non-deactivatable electrocatalytic film, but is not limited thereto.

For example, the surface of the substrate may be coated with an oxide of platinum (Pt), iridium (Ir), rhodium (Rh), ruthenium (Ru), zirconium (Zr), titanium (Ti), or similar metals, or a conductive (discharge) material including at least one of the above-mentioned metal oxides.

For example, the film may be formed by coating an organic compound including at least one of the above-mentioned metals (for example, iridium alcoholate, ruthenium alcoholate, tantalum alcoholate, or titanium alcoholate, wherein the alcohol used herein may be methanol, ethanol, propanol, butanol, isopropanol, isobutanol, or the like) on a surface of the metallic substrate, and a sintering process for removing organic components may be subsequently performed, but the present invention is not limited thereto.

The negative electrode may include nickel, iron, stainless steel, nickel-plated titanium, graphite, carbon steel, or a combination thereof, but is also not limited thereto.

The positive electrode may be included in a positive electrode cell, and the negative electrode may be included in a negative electrode cell.

An acidic solution tank may be further disposed outside the positive electrode cell, and a basic solution tank may be further disposed outside the negative electrode cell.

The cation exchange membrane has an anionic group therein and selectively allows only cations to pass therethrough.

Specifically, the cation exchange membrane may be a membrane composed of negatively charged ion groups, which allows cations such as Na⁺, K⁺, Ca²⁺, Mg²⁺, and Fe²²⁺ to pass therethrough and does not allow anions such as Cl⁻, Br⁻, NO₃⁻, SO₄²⁻, and HCO₃⁻ to pass therethrough due to repulsion of the same charge.

The cation exchange membrane may have a thickness of 70 µm to 170 µm, preferably 75 µm to 150 µm, and more preferably 80 µm to 120 µm, but is not limited thereto.

The cation exchange membrane may include a plurality of inlets, and the diameter and the like of the inlets are not limited in the present invention.

The anion exchange membrane has a cationic group therein and selectively allows only anions to pass therethrough.

Specifically, the anion exchange membrane may be a membrane composed of positively charged ion groups, which allows anions such as Cl⁻, Br⁻, NO₃⁻, SO₄²⁻, and HCO₃⁻ to pass therethrough and does not allow cations such as Na⁺, K⁺, Ca²⁺, Mg²⁺, and Fe²²⁺ to pass therethrough due to repulsion of the same charge.

The anion exchange membrane may have a thickness of 70 µm to 170 µm, preferably 75 µm to 150 µm, and more preferably 80 µm to 120 µm, but is not limited thereto.

The anion exchange membrane may include a plurality of inlets, and the diameter and the like of the inlets are not limited in the present invention.

A plurality of the cation exchange membranes and the anion exchange membranes may be included, and the spacer 100 for electrodialysis may be interposed between the plurality of cation exchange membranes and the anion exchange membranes.

The electrodialysis system according to the present invention may further include a bipolar membrane, a gasket, and the like, but is not limited thereto.

Specifically, the electrodialysis system according to the present invention may be a reverse osmosis system (RO; Reverse Osmosis) or a bipolar electrodialysis system (BPED; Bipolar Electrodialysis), but is not limited thereto.

Hereinafter, preferred Examples and Comparative Examples of the present invention will be described. However, the following Examples are merely preferred embodiments of the present invention, and the present invention is not limited to the following Examples.

### Example

A spacer having lattices having a diamond shape with respect to a flow direction was applied. A spacer in which an angle of the diamond shape with respect to the flow direction was 60° was disposed at both outer portions as the first outer portion and the second outer portion, and a spacer in which the angle was 120° was disposed at the center as the central portion. Thereafter, the spacers were combined to model a spacer for electrodialysis (using COMSOL software).

At this time, the widths of the first outer portion and the second outer portion were 84 mm, the width of the central portion was 252 mm, the thickness of the spacer for electrodialysis was 0.8 mm, the height of the spacer was 1,220 mm, the lengths of four sides of a lattice in the spacer were 2 mm, and the strand diameter of the lattice was modeled as 0.35 mm.

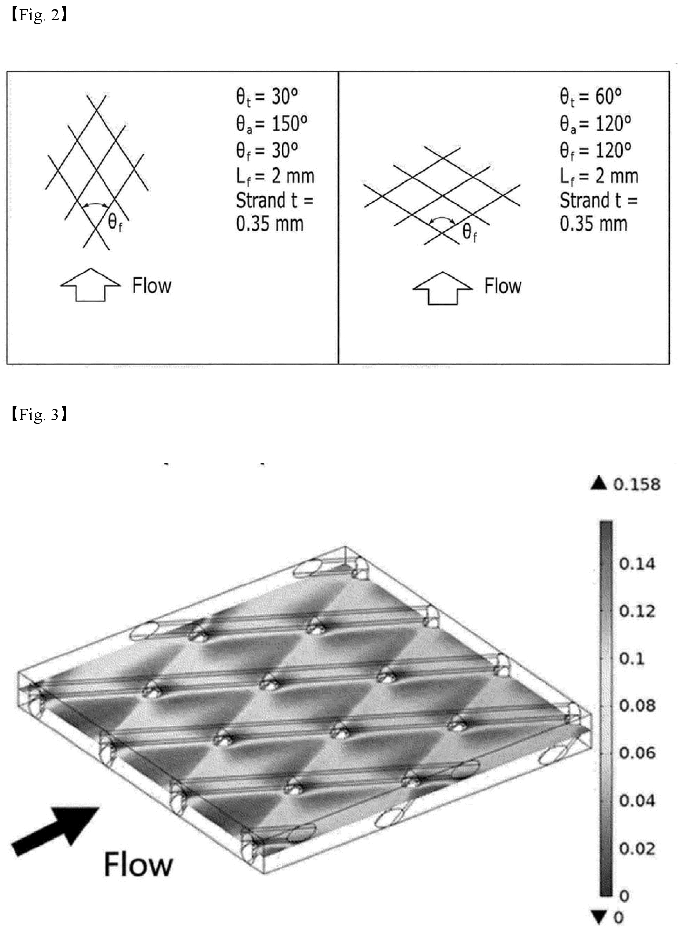

A shape of the lattice in the first outer portion and the second outer portion is shown in the left image of FIG. 2, and a shape of the lattice in the central portion is shown in the right image of FIG. 3.

Specifically, in FIG. 2, θt means an angle facing θf, and θa means an angle between θt and θf.

### Comparative Example

A spacer in which the shape of the lattice in the spacer was a diamond shape and the angle was 60° was manufactured. The width and length of the spacer were the same as those of the spacer for electrodialysis manufactured according to the Example, and the shape of the lattice in the spacer was the same as the shape of the lattice in the first outer portion and the second outer portion according to the Example.

### Experimental Example

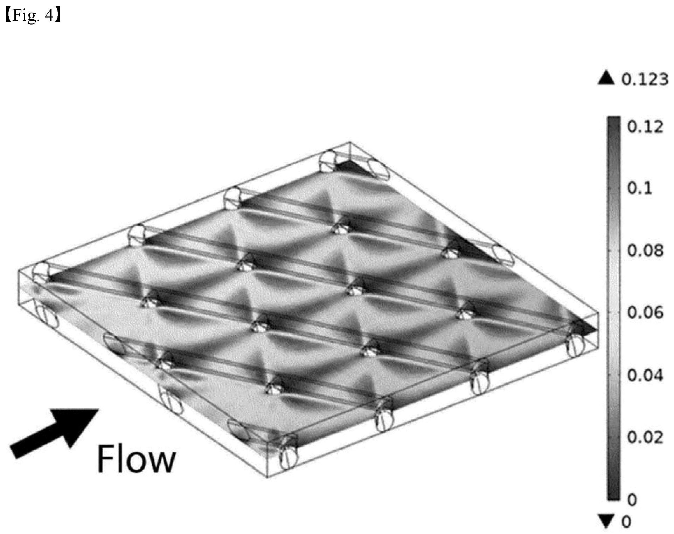

In order to observe flow analysis of the spacers manufactured according to the Example and the Comparative Example, flow analysis according to the angle of the spacer was performed (using COMSOL software), and results are shown in FIGS. 3 and 4, respectively.

Specifically, the flow analysis was performed using a three-dimensional flow analysis program.

FIG. 3 is an image showing a flow analysis result for a spacer in which the lattice structure in the spacer is 60°, and FIG. 4 is an image showing a flow analysis result for a spacer in which the lattice structure is 120°.

Referring to FIGS. 3 and 4, it can be seen that flow analysis results vary as the angle of the lattice structure in the spacer changes.

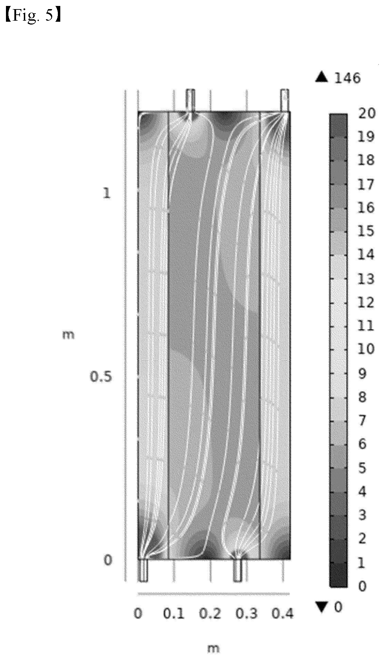

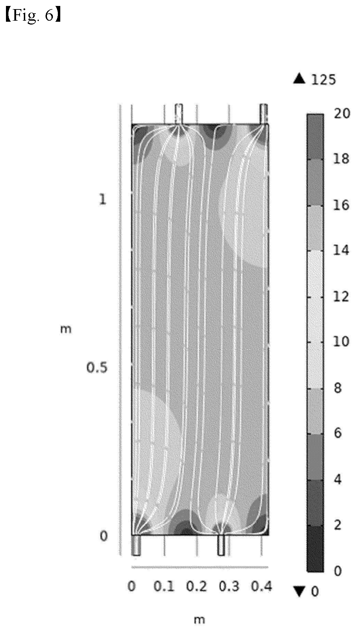

FIGS. 5 and 6 are views showing flow analysis representing velocities and vectors of a solution passing through spacers modeled according to the Example and the Comparative Example.

Specifically, a standard deviation of a solution velocity according to a width direction at an outlet of treated water of the spacers modeled according to the Example and the Comparative Example was predicted (using COMSOL software), and the results are shown in FIGS. 5 and 6, respectively.

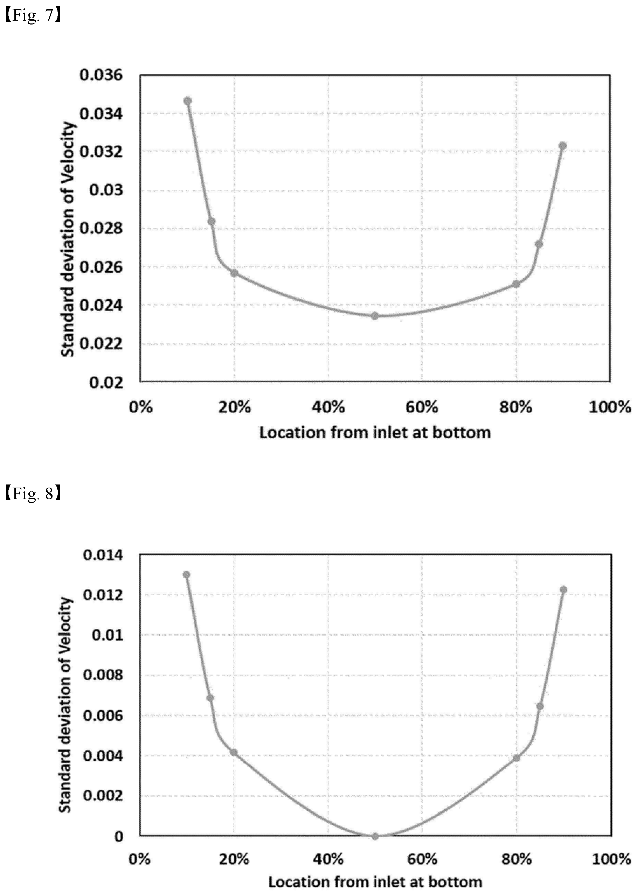

In addition, FIGS. 7 and 8 show standard deviations of flow velocity at specific heights (10% to 90%) with respect to a width direction of spacers for an electrodialysis system according to the Example and the Comparative Example, respectively.

Referring to FIGS. 7 and 8, it can be seen that deviations in flow velocity in the width direction of the spacer according to the Comparative Example are 0.0069 m/s and 0.00642 m/s, and a deviation in flow velocity of the spacer for electrodialysis manufactured according to the Example is 0.028 m/s, which has a much larger change in flow velocity. In particular, it can be seen that non-uniformity of flow velocity occurs overall in the flow direction, and accordingly, occurrence of a stagnation region at the outer portions can be minimized.

The present invention is not limited to the above Examples and may be manufactured in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

### [Description of Reference Numerals]

10: first outer portion
20: second outer portion
30: central portion
100: spacer for electrodialysis system

## Claims

1. A spacer for an electrodialysis system, comprising:
a first outer portion;
a second outer portion 20; and
a central portion positioned between the first outer portion and the second outer portion,
wherein at least one of the first outer portion and the second outer portion has flow resistance different from that of the central portion.

2. The spacer for an electrodialysis system of claim 1,
wherein the first outer portion and the second outer portion have flow resistance different from that of the central portion.

3. The spacer for an electrodialysis system of claim 2,
wherein the first outer portion and the second outer portion have the same flow resistance.

4. The spacer for an electrodialysis system of claim 1,
wherein at least one of the first outer portion and the second outer portion has lower flow resistance than the central portion.

5. The spacer for an electrodialysis system of claim 4,
wherein the first outer portion and the second outer portion have lower flow resistance than the central portion.

6. The spacer for an electrodialysis system of claim 1,
wherein an angle of a lattice structure disposed in the central portion is greater than an angle of a lattice structure disposed in the first outer portion or the second outer portion.

7. The spacer for an electrodialysis system of claim 6,
wherein the angle of the lattice structure disposed in the central portion is greater than angles of lattice structures disposed in the first outer portion and the second outer portion.

8. The spacer for an electrodialysis system of claim 6,
wherein the angle of the lattice structure disposed in the first outer portion is 30° to 80°.

9. The spacer for an electrodialysis system of claim 6,
wherein the angle of the lattice structure disposed in the second outer portion is 30° to 80°.

10. The spacer for an electrodialysis system of claim 6,
wherein the angle of the lattice structure disposed in the central portion is 90° to 150°.

11. The spacer for an electrodialysis system of claim 6,
wherein one side length of the lattice structure disposed in the first outer portion is 0.5 mm to 10 mm.

12. The spacer for an electrodialysis system of claim 6,
wherein one side length of the lattice structure disposed in the second outer portion is 0.5 mm to 10 mm.

13. The spacer for an electrodialysis system of claim 6,
wherein one side length of the lattice structure disposed in the central portion is 0.5 mm to 10 mm.

14. An electrodialysis system, comprising:
a positive electrode;
a negative electrode positioned to face the positive electrode;
cation exchange membranes and anion exchange membranes alternately installed between the positive electrode and the negative electrode; and
the spacer for an electrodialysis system according to any one of claims 1 to 13, interposed between the cation exchange membrane and the anion exchange membrane.
